# EUROPEAN PATENT SPECIFICATION

(11) **EP 4 338 991 B1**
(45) Date of publication and mention of the grant of the patent: **29.10.2025**
(21) Application number: 23197873.5
(22) Date of filing: 18.09.2023
(51) Int. Cl.: B60H 1/00, B60H 1/22

(54) **ELECTRIC VEHICLE COMPRISING A HEATING MANAGEMENT SYSTEM**
ELEKTROFAHRZEUG UMFASSEND EIN SYSTEM ZUR HEIZUNGSVERWALTUNG
VÉHICULE ÉLECTRIQUE AVEC UN SYSTÈME DE GESTION DE CHAUFFAGE

(30) Priority: 19.09.2022 IT 202200019155
(43) Date of publication of application: 20.03.2024
(73) Proprietor: IVECO S.P.A., 10156 Torino (IT)
(72) Inventor: DAVID, Giovanni, 10156 TORINO (IT); SAVASTA, Simone, 10156 TORINO (IT); MANCA, Daniele, 10156 TORINO (IT); RIZZUTO, Riccardo, 10156 TORINO (IT); STEINER, Carlo Blu, 10156 TORINO (IT)
(74) Representative: Studio Torta S.p.A.

(56) References cited:
- DE-A1- 102013 001 749
- JP-A- 2015 189 374
- US-A1- 2011 139 882
- US-A1- 2018 297 440

## Description

### TECHNICAL FIELD

The invention relates to an electric vehicle defining a space for accommodating passengers, and comprising a heating management system configured to heat said space, and a method for managing the heating in an electric vehicle.

The invention preferably, though not exclusively applies to electric vehicles such as minibuses, buses or commercial vehicles. Hereinafter reference will be made to this application by mere way of example.

### KNOWN STATE OF THE ART

Vehicles have a tendency to become more and more electrified in order to reduce the polluting emissions generated by the combustion taking place in internal combustion engines.

To this purpose, vehicles must be equipped with electric batteries designed to store electrical power used to allow said vehicles to move and the operating systems of the vehicles to operate.

Therefore, in case the passenger compartment has to be heated, said electric batteries need to supply power, which is used to operate heating systems such as Joule-effect radiators or heat pumps.

This need is particularly felt when dealing with vehicles for the shared transportation of passengers, such as minibuses, especially in those countries where the weather is very cold in winter, such as Northern Europe and North America.

However, the use of the aforesaid heating systems, significantly reduces the range of electric vehicles, since the power available in the batteries is largely used by the heating systems.

Furthermore, the aforesaid heating systems are particularly power-consuming and scarcely effective from the point of view of the passengers' thermal comfort.

Existing known systems are disclosed in publications JP2015189734 A1, US2011139882 A1 or US2018/297440 A1. DE102013001749 A1 describes a heating system for a passenger compartment of a motor vehicle, comprising several heat sources for heating the air in the passenger compartment and a device for selecting one or more of the heat sources, wherein the device is formed, according to a first heating system state, to select said one or more of the heat sources to be activated automatically, if it is established that there is a heat requirement, and said selected one or more of the heat sources is/are to be activated, and the device is furthermore formed to select said one or more of the heat sources independently of a heat requirement, wherein the heat requirement is produced from the temperature difference between a desired temperature and an actual temperature, and the heat requirement is determined regardless of which additional weather-conditioned heat energy input occurs in the course of the ongoing trip.

Therefore, manufacturers should provide heating systems for electric vehicles which are energetically effective, offer good performances in terms of thermal comfort and minimize the effects on electric batteries, so as to avoid a significant reduction of the vehicle range.

The object of the invention is to fulfil the needs discussed above in an optimized and economic fashion.

### SUMMARY OF THE INVENTION

The aforesaid object is reached by an electric vehicle as set out in independent claim 1, and a method for managing the heating in an electric vehicle, as set out in independent claim 12. Preferred embodiments of the present invention are laid down in the appended dependent claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a perspective view of an electric vehicle comprising a heating management system, according to the invention;
- Figure 2 is a view of a control system for a heating management system of an electric vehicle according to the invention;
- Figure 3 is schematic view of the operation of an electronic unit that is part of the heating management system of an electric vehicle according to the invention; and
- Figures 4 and 5 are tables indicating the operating condition stored in an electronic unit that is part of the heating management system of an electric vehicle according to the invention.

### DETAILED DESCRIPTION OF THE INVENTION

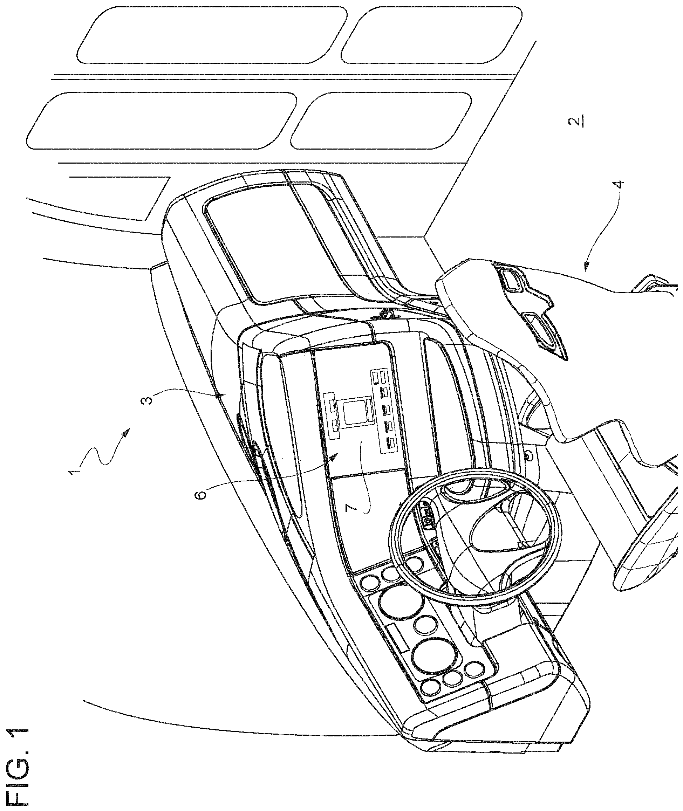

Figure 1 shows an electric vehicle 1 such as, by mere way of example, a minibus. The vehicle 1 defines a space 2 designed to transport passengers and a dashboard 3 arranged in front of a driver's seat 4 of the vehicle.

The vehicle 1 further comprises one or more air introduction points (not shown), such as air vents, configured to introduce air at a predetermined temperature into the space **2,** in order to adjust the temperature and/or humidity of said space.

Obviously, the vehicle 1 comprises at least one electric battery configured to store power to be used by the vehicle in order to move, as it is known, for example, by means of electric motors or in order to allow operating systems of the vehicle to properly work.

In particular, the vehicle 1 comprises a heating management system for the space 2, which basically comprises:
- An electric heating system (not shown);
- A fuel heating system (not shown); and
- A control system 6 configured to control the operation of the electric and fuel heating systems as a function of input parameters provided by the driver of the vehicle and of parameters relating to the operating conditions of the vehicle.

In particular, the electric heating system basically comprises a thermal resistor (not shown), for example a PTC (positive temperature coefficient) thermal resistor system.

The thermal resistor is electrically connected to said at least one electric battery so as to allow for the production of heat energy. The electric heating system can advantageously comprise a heat exchanger or ventilation means designed to allow heat energy to be transmitted from the thermal resistor to the space 2, through the aforesaid air vents.

In detail, the fuel heating system comprises a burner configured to produce heat starting from a fuel, a fuel tank and a fluid heat exchanger thermally connected to the burner. The term "fuel" indicates any fluid suited to produce heat through combustion or another chemical reaction, such as for example gases, hydrocarbons or hydrogen.

The fuel heating system can advantageously comprise ventilation means designed to allow heat energy to be transmitted from the fluid heat exchanger to the space 2, through the aforesaid air vents.

In particular, the burner and the heat exchanger can be integrated in an auxiliary water heater, AWH.

The vehicle 1 comprises a plurality of sensor means configured to detect operating quantities relating to the vehicle operation. In particular, said plurality of sensor means comprise at least the following sensor means:
- Sensor means configured to detect the state of charge, SOC of said at least one battery;
- Temperature sensor means configured to detect the temperature of the space 2;
- Fluid level sensor means configured to detect the level of fluid fuel in the relative tank;
- Temperature sensor means configured to detect the temperature of the fluid in the heat exchanger of the fuel heating system; and
- Sensor means configured to identify the connection of the vehicle 1 to a charging system for said at least one electric battery.

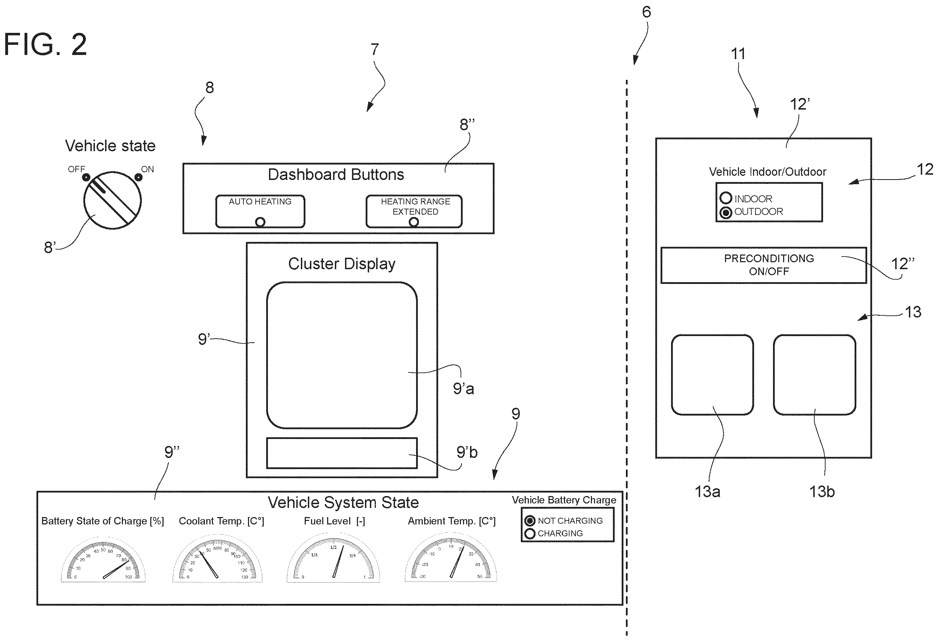

As schematically shown in figure 2, the control system 6 basically comprises a first interface 7 comprising input means 8 configured to allow parameters to be inputted by the driver of the vehicle and display means 9 configured to display information on the operation of the heating system.

The first interface 7 advantageously comprises a screen and/or manual control means, such as buttons or knobs, and is integrated in the dashboard 3 of the vehicle 1.

In particular, the input means 8 of the first interface 7 comprise:
- first input elements 8' configured to allow the vehicle 1 to be activated or deactivated;
- second input elements 8'' configured to select between an automatic heating mode or a forcing of a fuel heating mode.

In particular, the first input elements 8' can consist of the ignition key system, which is bistable in two positions indicating the activation and the deactivation of the vehicle 1, whereas the second input elements 8'' comprise buttons, which can selectively be operated in order to select the aforesaid heating modes, respectively.

The display means 9 of the first interface 7 advantageously comprise:
- a first portion 9' configured to display the activated heating mode (portion 9'a) and/or the name of said heating mode (portion 9'b); and
- a second portion 9" configured to display system operating values, namely values acquired by the sensor means for each type of sensors available, for example by means of graphic scales, and the state of charge of the vehicle batteries.

The control system 6 further comprises a second interface 11 comprising input means 12 and display means 13, which have a function that is similar to the one of the respective means of the first interface 7. The second interface 11 advantageously comprises a screen obtained in a mobile device (not shown), which is mobile relative to the vehicle dashboard 3, such as a hand-operated mobile device, for instance a smartphone or a remote control.

In particular, the input means 12 of the second interface 11 comprise:
- first input elements 12' configured to allow for the selection of an indoor or outdoor parking condition of the vehicle 1; and
- second input elements 12" configured to activate or deactivate a parking preheating mode of the vehicle 1.

The first and second input elements 12', 12" preferably are portions, which can be controlled - for instance - by pressing them, of the screen of the mobile device, for example icons.

The display means 13 of the second interface 11 advantageously comprise:
- a first portion 13' configured to display the activated heating mode (portion 13a) and/or the name of said heating mode (portion 13b), when the parking preheating mode of the vehicle 1 is active; and
- a second portion 13" configured to display possible faults arisen during the operation in the parking preheating mode of the vehicle 1.

The control system 6 further comprises an electronic unit 20, which is operatively connected to the first and second interfaces 7, 11, to the sensor means and to the electric and fuel heating systems and comprises processing means, which are designed to receive data from the aforesaid elements and to control the operation of the electric heating system and of the fluid fuel heating system and, if necessary, to provide information on the operation thereof, which can be displayed.

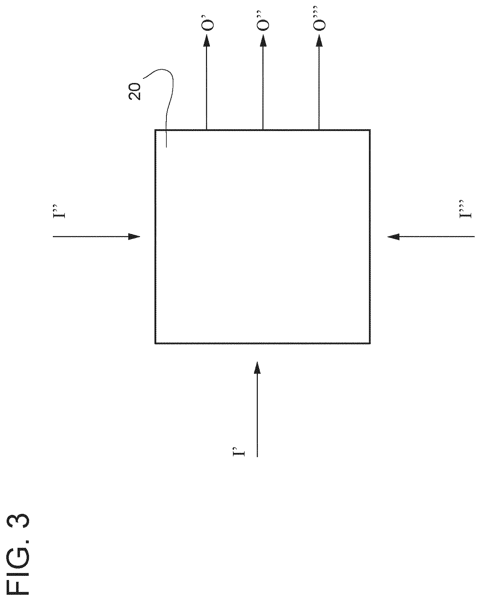

Figure 3 schematically shows the operation of the electronic unit 20. The electronic unit 20 is configured to receive, as an input, three types of data:
- A first plurality of input data I' comprising data from the input means 8 of the first interface 7;
- A second plurality of input data I" comprising data from the sensor means;
- A third plurality of input data I''' comprising data from the input means 12 of the second interface 11.

Based on said pluralities of inputs I', I'', I''', the electronic unit 20 is configured to process a plurality of output signals O', O", O‴, specifically:
- A first output signal O' configured to activate or deactivate the electric heating system;
- A second output signal O'' configured to activate or deactivate the fuel heating system; and
- A third output signal O‴ configured to display an image and/or text message on the display means 9 or 13.

The processing means advantageously store a finite state machine algorithm configured to relate the values assumed by said pluralities of input data I', I'', I'' to the values to be assumed by the output signals O', O'', O‴.

In particular, said finite state machine algorithm comprises one ore more look-up tables relating the aforesaid inputs and outputs to one another.

The finite state machine algorithm advantageously comprises a first and a second look-up table depending on the state of the first input elements 8', namely a table pertaining to when the vehicle 1 is active, i.e. when the first input elements 8' are in an "ON" state, and a table pertaining to when the heating management system is active during a parking phase of the vehicle 1, i.e. when the first input elements 8' are in an "OFF" state.

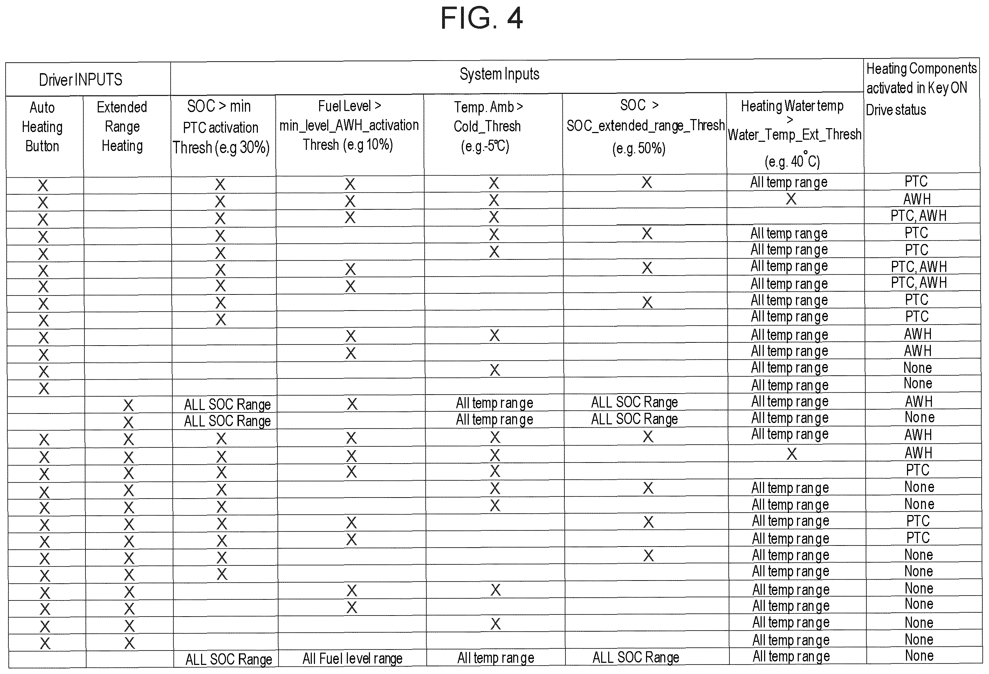

The first look-up table (figure 4) establishes a relationship between the first and the second plurality of input data I', I'', whereas the second look-up table (table 5) establishes a relationship between the second and the third plurality of input data I", I‴.

With reference to the first look-up table, which is shown in figure 4, the following 7 input data are present:
- First and second data coming from the first plurality of input data I' relating to the selection between an automatic operation and a forcing of an operation in fuel heating mode;
- Third data relating to the exceeding of a first predetermined threshold, namely a minimum charge threshold, by the SOC of said at least one battery, for example 30%;
- Fourth data relating to the exceeding of a specific threshold by the fluid fuel level, for example 10%;
- Fifth data relating to the exceeding of a specific threshold by the temperature inside the space 2, for example -5°C;
- Sixth data relating to the exceeding of a second predetermined threshold, namely an extended range threshold, by the SOC of said at least one battery, for example 50%;
- Seventh data relating to the exceeding of a specific threshold by the temperature of the fluid of the fluid heat exchanger, for example 40°.

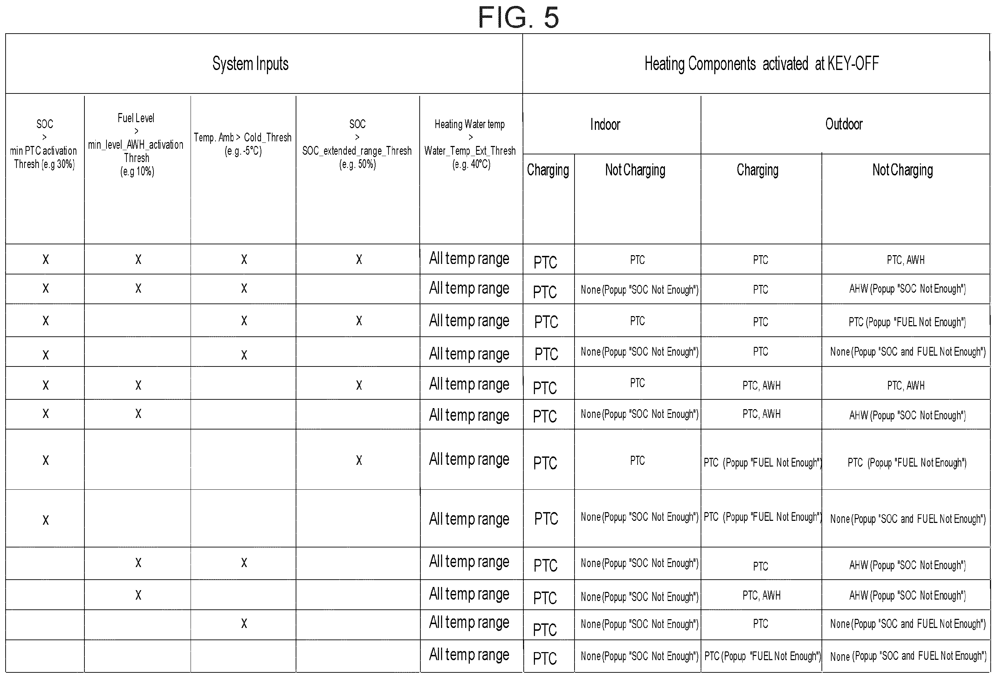

With reference to the second look-up table, which is shown in figure 5, the following 9 input data are present:
- First and second data coming from the third plurality of input data I‴ relating to the indoor or outdoor parking condition, which can be selected by the user;
- Third and fourth data coming from the second plurality of input data I" relating to the charging condition, or lack thereof, of said at least one battery;
- Fifth data relating to the exceeding of a first predetermined threshold, namely a minimum charge threshold, by the SOC of said at least one battery, for example 30%;
- Sixth data relating to the exceeding of a specific threshold by the fluid fuel level, for example 10%;
- Seventh data relating to the exceeding of a specific threshold by the temperature inside the space 2, for example -5°C;
- Eighth data relating to the exceeding of a second predetermined threshold, namely an extended range threshold, by the SOC of said at least one battery, for example 50%;
- Ninth data relating to the exceeding of a specific threshold by the temperature of the fluid of the fluid heat exchanger, for example 40°.

The control unit 20, based on the values assumed by the combination of the aforesaid data, which is represented by each line of the first and/or second look-up table, emits at least one of the aforesaid output signals O', O", O‴.

The first and the second output signals O', O'' activate or deactivate the electric heating system (PCT in the tables) and/or the fuel heating system (AWH in the tables), whereas the third output signal O‴ activates an icon representing the activated heating system and/or a text pop-up (expressly indicated in the tables).

The embodiment of the heating management system and of a vehicle according to the invention, as described above, works as follows.

During the operation of the vehicle 1 (ON state of the first input elements 8'), the electronic unit 20 automatically controls, depending on the values of the data coming from the plurality of data I', I'', the activation or deactivation of the fuel heating system or of the electric heating system. At the same time, the electronic unit 20 displays, by means of the display means 9, the activated system/s and the levels of the data acquired by the sensor means.

If, on the other hand, the state of the first input elements 8' is "OFF", but a pre-conditioning is requested by means of the second input elements 12'', the electronic unit 20 automatically controls, depending on the values of the data coming from the plurality of data I", I‴, the activation or deactivation of the fuel heating system or of the electric heating system. At the same time, the electronic unit 20 displays, by means of the display means 13, the activated system/s.

As disclosed above, the invention also relates to a method for managing the heating in a vehicle (1) as described above and comprising the steps of:
- i) acquiring data from the sensor means and from the interfaces 7, 11;
- ii) processing the data acquired in step i) through a finite state machine algorithm; and
- iii) controlling the activation of the fuel heating system and of the electric heating system and the display of information through the interfaces 7, 11.

Owing to the above, the advantages of the heating management system of the electric vehicle according to the invention are evident.

Thanks to the heating management system of the electric vehicle according to the invention, the thermal comfort of the vehicle can be optimized, though without affecting too much the state of charge of the vehicle battery pack and, thus, reducing the range of the electric vehicle.

As a matter of fact, the presence of an auxiliary fluid fuel heater allows the passenger compartment to be quickly heated without using the power of the vehicle battery.

However, thanks to the algorithm suggested herein, the use of the auxiliary fluid fuel heater can be minimized, avoiding an excess emission of pollutants.

In particular the finite state/look-up table algorithm decides which heating system/s to use in an optimized manner, thus reducing processing times and, hence, further reducing power consumptions.

Furthermore, the large variety of data used leads to an optimized control as a function of the different use conditions of the vehicle.

Finally, the electric vehicle according to the invention can clearly be subjected to changes and variants, which, though, do not go beyond the scope of protection set forth in the appended claims.

The heating systems can clearly be of different types, just like the kind of electric vehicle to which the heating systems are applied.

In addition, the shape and the type of interfaces can be different or further data or values other than the ones described above can be taken into consideration.

The algorithm can clearly be obtained in different ways and can comprise several look-up tables.

## Claims

1. Electric vehicle (1) defining a space (2) for accommodating passengers, said vehicle (1) comprising at least one electric battery configured to allow for the operation of said vehicle (1), said vehicle (1) comprising a heating management system configured to heat said space (2), said heating management system comprising:
- an electric heating system;
- a fluid fuel heating system; and
- a control system (6) configured to control the operation of the electric and fluid fuel heating systems as a function of input parameters provided by the driver of the vehicle (1) and of parameters relating to operating conditions of the vehicle (1), said vehicle (1) comprising a plurality of sensor means configured to detect said parameters relating to the operating conditions of the vehicle, said sensor means comprising at least:
• Sensor means configured to detect the state of charge (SOS) of said at least one electric battery;
• Temperature sensor means configured to detect the temperature in said space (2);
• Fluid level sensor means configured to detect the level of fluid fuel in a relative tank of said fluid fuel heating system;
• Temperature sensor means configured to detect the fluid temperature in a heat exchanger of said fluid fuel heating system; and
• Sensor means configured to identify the connection of the vehicle (1) to a charging system for said at least one electric battery,
wherein said control system (6) comprises a first interface (7) comprising input means (8) configured to allow parameters to be inputted by the driver of the vehicle (1) and display means (9) configured to display information on the operation of the heating management system, wherein said input means (8) comprise:
• first input elements (8') configured to allow the vehicle (1) to be turned on or off; and
• second input elements (8") configured to select between an automatic heating mode or a forcing of a fluid fuel heating mode, wherein said control system (6) further comprises a second interface (11) comprising input means (12) configured to allow parameters to be inputted by the driver of the vehicle (1) and display means (13) configured to display information on the operation of the heating management system,
wherein said input means (12) of the second interface (11) comprise:
• first input elements (12') configured to allow for the selection of an indoor or outdoor parking condition of the vehicle (1); and
• second input elements (12") configured to activate or deactivate a parking preheating mode of the vehicle (1).

2. Vehicle (1) according to claim 1, wherein said electric heating system comprises a thermal resistor.

3. Vehicle (1) as claimed in claim 1 or 2, wherein said fluid fuel heating system comprises a burner, a fluid fuel tank fluidly connected to said burner and a fluid heat exchanger thermally connected to said burner.

4. Vehicle (1) according to any of the preceding claims, wherein said display means (9, 13) comprise a screen.

5. Vehicle (1) according to one of the preceding claims, wherein said first interface (7) is integrated in a dashboard (3) of said vehicle (1).

6. Vehicle (1) according to one of the preceding claims, wherein said second interface (11) is integrated in a mobile device.

7. Vehicle (1) according to claim 3, wherein said control system (6) comprises an electronic unit (20) operatively connected to said interfaces (7, 11), to said sensor means and to said electric and fluid fuel heating systems, said electronic unit (20) comprising processing means configured to receive data from said elements, to which it is operatively connected, and to control the operation of said electric and fluid fuel heating systems.

8. Vehicle (1) according to claim 7, wherein said electronic unit (20) is configured to acquire the following input data:
• A first plurality of input data (I') comprising data from said first interface (7);
• A second plurality of input data (I") comprising data from the sensor means;
• A third plurality of input data (I‴) comprising data from said second interface (11),
and to process such data and provide the following output signals:
• A first output signal (O') configured to activate or deactivate the electric heating system;
• A second output signal (O") configured to activate or deactivate the fluid fuel heating system; and
• A third output signal (O‴) configured to display an image and/or text message through said interfaces (7, 11).

9. Vehicle (1) according to claim 8, wherein said electronic unit (20) processes a finite state machine algorithm configured to relate said input data (I', I", I‴) to said output signals (O', O", O‴).

10. Vehicle (1) according to claim 9, wherein said finite state machine algorithm comprises at least one look-up table.

11. Vehicle (1) according to claim 10, wherein said finite state machine algorithm comprises a first look-up table applicable when the first input elements (8') are in an "ON" state and a second look-up table applicable when the first input elements (8') are in an "OFF" state.

12. Method for managing the heating in a vehicle (1) according to one of claims 9 to 11, comprising the steps of:
- i) acquiring data (I', I", I‴) from the sensor means and from said interfaces (7, 11);
- ii) processing the data (I', I", I‴) acquired in step i) through said finite state machine algorithm;
and
- iii) controlling the activation of said fluid fuel heating system and of said electric heating system and the display of information through said interfaces (7, 11).

## Patentansprüche

1. Elektrofahrzeug (1), das einen Raum (2) zur Aufnahme von Fahrgästen begrenzt, wobei das Fahrzeug (1) mindestens eine elektrische Batterie umfasst, die konfiguriert ist, um den Betrieb des Fahrzeugs (1) zu ermöglichen, wobei das Fahrzeug (1) ein Heizungsmanagementsystem umfasst, das konfiguriert ist, um den Raum (2) zu heizen, welches Heizungsmanagementsystem Folgendes umfasst:
- ein elektrisches Heizsystem;
- ein Fluidbrennstoff-Heizsystem; und
- ein Steuersystem (6), das konfiguriert ist, um den Betrieb des elektrischen und des Fluidbrennstoff-Heizsystems in Abhängigkeit von Eingabeparametern, die von dem Fahrer des Fahrzeugs (1) bereitgestellt werden, und von Parametern, die sich auf Betriebsbedingungen des Fahrzeugs (1) beziehen, zu steuern, wobei das Fahrzeug (1) eine Vielzahl von Sensormitteln umfasst, die konfiguriert sind, um die Parameter, die sich auf die Betriebsbedingungen des Fahrzeugs beziehen, zu erfassen, wobei die Sensormittel mindestens Folgendes umfassen:
• Sensormittel, die konfiguriert sind, um den Ladezustand (SOS) der mindestens einen elektrischen Batterie zu erfassen;
• Temperatursensormittel, die konfiguriert sind, um die Temperatur in dem Raum (2) zu erfassen;
• Fluidpegel-Sensormittel, die konfiguriert sind, um den Pegel des Fluidbrennstoffs in einem relativen Tank des Fluidbrennstoff-Heizsystems zu erfassen;
• Temperatursensormittel, die konfiguriert sind, um die Fluidtemperatur in einem Wärmetauscher des Fluidbrennstoff-Heizsystems zu erfassen; und
• Sensormittel, die konfiguriert sind, um die Verbindung des Fahrzeugs (1) mit einem Ladesystem für die mindestens eine elektrische Batterie zu identifizieren,
wobei das Steuersystem (6) eine erste Schnittstelle (7) umfasst, die Eingabemittel (8) umfasst, die konfiguriert sind, um die Eingabe von Parametern durch den Fahrer des Fahrzeugs (1) zu ermöglichen, und Anzeigemittel (9), die konfiguriert sind, um Informationen über den Betrieb des Heizungsmanagementsystems anzuzeigen, wobei die Eingabemittel (8) Folgendes umfassen:
• erste Eingabeelemente (8'), die konfiguriert sind, um das Ein- oder Ausschalten des Fahrzeugs (1) zu ermöglichen; und
• zweite Eingabeelemente (8"), die konfiguriert sind, um zwischen einem automatischen Heizmodus oder einem Erzwingen eines Fluidbrennstoff-Heizmodus zu wechseln,
wobei das Steuersystem ferner eine zweite Schnittstelle (11) umfasst, die Eingabemittel (12) umfasst, die konfiguriert sind, um die Eingabe von Parametern durch den Fahrer des Fahrzeugs (1) zu ermöglichen, und Anzeigemittel (13), die konfiguriert sind, um Informationen über den Betrieb des Heizungsmanagementsystems anzuzeigen,
wobei die Eingabemittel (12) der zweiten Schnittstelle (11) Folgendes umfassen:
• erste Eingabeelemente (12'), die konfiguriert sind, um die Auswahl einer Innen- oder Außenparkbedingung des Fahrzeugs (1) zu ermöglichen; und
• zweite Eingabeelemente (12"), die konfiguriert sind, um einen Parkvorheizmodus des Fahrzeugs (1) zu aktivieren oder zu deaktivieren.

2. Fahrzeug (1) nach Anspruch 1, wobei das elektrische Heizsystem einen Wärmewiderstand umfasst.

3. Fahrzeug (1) nach Anspruch 1 oder 2, wobei das Fluidbrennstoff-Heizsystem einen Brenner, einen Fluidbrennstofftank, der fluidisch mit dem Brenner verbunden ist, und einen Fluidwärmetauscher, der thermisch mit dem Brenner verbunden ist, umfasst.

4. Fahrzeug (1) nach einem der vorhergehenden Ansprüche, wobei die Anzeigemittel (9, 13) einen Bildschirm umfassen.

5. Fahrzeug (1) nach einem der vorhergehenden Ansprüche, wobei die erste Schnittstelle (7) in ein Armaturenbrett (3) des Fahrzeugs (1) integriert ist.

6. Fahrzeug (1) nach einem der vorhergehenden Ansprüche, wobei die zweite Schnittstelle (11) in eine mobile Vorrichtung integriert ist.

7. Fahrzeug (1) nach Anspruch 3, wobei das Steuersystem (6) eine elektronische Einheit (20) umfasst, die operativ mit den Schnittstellen (7, 11), mit den Sensormitteln und mit dem elektrischen und dem Fluidbrennstoff-Heizsystem verbunden ist, wobei die elektronische Einheit (20) Verarbeitungsmittel umfasst, die konfiguriert sind, um Daten von den Elementen, mit denen sie operativ verbunden ist, zu empfangen und den Betrieb des elektrischen und des Fluidbrennstoff-Heizsystems zu steuern.

8. Fahrzeug (1) nach Anspruch 7, wobei die elektronische Einheit (20) konfiguriert ist, um die folgenden Eingabedaten zu erfassen:
• Eine erste Vielzahl von Eingabedaten (I'), die Daten von der ersten Schnittstelle (7) umfassen;
• Eine zweite Vielzahl von Eingabedaten (I"), die Daten von den Sensormitteln umfassen;
• Eine dritte Vielzahl von Eingabedaten (I‴), die Daten von der zweiten Schnittstelle (11) umfassen,
und um solche Daten zu verarbeiten und die folgenden Ausgabesignale bereitzustellen:
• Ein erstes Ausgabesignal (O'), das konfiguriert ist, um das elektrische Heizsystem zu aktivieren oder zu deaktivieren;
• Ein zweites Ausgabesignal (O"), das konfiguriert ist, um das Fluidbrennstoff-Heizsystem zu aktivieren oder zu deaktivieren; und
• Ein drittes Ausgabesignal (O‴), das konfiguriert ist, um eine Bild- und/oder Textnachricht durch die Schnittstellen (7, 11) anzuzeigen.

9. Fahrzeug (1) nach Anspruch 8, wobei die elektronische Einheit (20) einen Zustandsmaschinen-Algorithmus verarbeitet, der konfiguriert ist, um die Eingabedaten (I', I", I‴) mit den Ausgabesignalen (O', O", O‴) in Beziehung zu setzen.

10. Fahrzeug (1) nach Anspruch 9, wobei der Zustandsmaschinen-Algorithmus mindestens eine Aufsuchtabelle umfasst.

11. Fahrzeug (1) nach Anspruch 10, wobei der Zustandsmaschinen-Algorithmus eine erste Aufsuchtabelle, die anwendbar ist, wenn sich die ersten Eingabeelemente (8') in einem "EIN"-Zustand befinden, und eine zweite Aufsuchtabelle, die anwendbar ist, wenn sich die ersten Eingabeelemente (8') in einem "AUS"-Zustand befinden, umfasst.

12. Verfahren zum Verwalten der Heizung in einem Fahrzeug (1) nach einem der Ansprüche 9 bis 11, das die folgenden Schritte umfasst:
- i) Erfassen von Daten (I', I", I‴) von den Sensormitteln und von den Schnittstellen (7, 11);
- ii) Verarbeiten der in Schritt i) erfassten Daten (I', I", I‴) durch den endlichen Zustandsautomat-Algorithmus;
und
- iii) Steuern der Aktivierung des Fluidbrennstoff-Heizsystems und des elektrischen Heizsystems und der Anzeige von Informationen durch die Schnittstellen (7, 11).

## Revendications

1. Véhicule (1) électrique définissant un espace (2) pour accueillir des passagers, ledit véhicule (1) comprenant au moins une batterie électrique configurée pour permettre le fonctionnement dudit véhicule (1), ledit véhicule (1) comprenant un système de gestion de chauffage configuré pour chauffer ledit espace (2), ledit système de gestion de chauffage comprenant :
- un système de chauffage électrique ;
- un système de chauffage de combustible liquide ; et
- un système de commande (6) configuré pour commander le fonctionnement des systèmes de chauffage électrique et de combustible liquide en fonction de paramètres d'entrée fournis par le conducteur du véhicule (1) et de paramètres associés aux conditions de fonctionnement du véhicule (1), ledit véhicule (1) comprenant une pluralité de moyens capteurs configurés pour détecter lesdits paramètres associés aux conditions de fonctionnement du véhicule, lesdits moyens capteurs comprenant au moins :
• des moyens capteurs configurés pour détecter l'état de charge (SOS) de ladite au moins une batterie électrique ;
• des moyens capteurs de température configurés pour détecter la température dans ledit espace (2) ;
• des moyens capteurs de niveau de liquide configurés pour détecter le niveau de combustible liquide dans un réservoir relatif dudit système de chauffage de combustible liquide ;
• des moyens capteurs de température configurés pour détecter la température de liquide dans un échangeur de chaleur dudit système de chauffage de combustible liquide ; et
• des moyens capteurs configurés pour identifier la connexion du véhicule (1) à un système de charge pour ladite au moins une batterie électrique,
dans lequel ledit système de commande (6) comprend une première interface (7) comprenant des moyens d'entrée (8) configurés pour permettre à des paramètres d'être entrés par le conducteur du véhicule (1) et des moyens d'affichage (9) configurés pour afficher des informations sur le fonctionnement du système de gestion de chauffage, dans lequel lesdits moyens d'entrée (8) comprennent :
• des premiers éléments d'entrée (8') configurés pour permettre au véhicule (1) d'être mis en marche ou arrêté ; et
• des seconds éléments d'entrée (8") configurés pour faire une sélection entre un mode de chauffage automatique ou le fait d'imposer un mode de chauffage de combustible liquide,
dans lequel ledit système de commande (6) comprend en outre une seconde interface (11) comprenant des moyens d'entrée (12) configurés pour permettre à des paramètres d'être entrés par le conducteur du véhicule (1) et des moyens **d'affichage** (13) configurés pour afficher des informations sur le fonctionnement du système de gestion de chauffage,
dans lequel lesdits moyens **d'entrée** (12) de la seconde interface (11) comprennent :
• des premiers éléments **d'entrée** (12') configurés pour permettre la sélection d'une condition de stationnement intérieur ou extérieur du véhicule (1) ; et
• des seconds éléments d'entrée (12") configurés pour activer ou désactiver un mode de préchauffage de stationnement du véhicule (1).

2. Véhicule (1) selon la revendication 1, dans lequel ledit système de chauffage électrique comprend une thermistance.

3. Véhicule (1) selon la revendication 1 ou **2,** dans lequel ledit système de chauffage de combustible liquide comprend un brûleur, un réservoir de combustible liquide relié de manière fluidique audit brûleur et un échangeur de chaleur à liquide relié thermiquement audit brûleur.

4. Véhicule (1) selon l'une quelconque des revendications précédentes, dans lequel lesdits moyens d'affichage (9, 13) comprennent un écran.

5. Véhicule (1) selon l'une des revendications précédentes, dans lequel ladite première interface (7) est intégrée dans un tableau de bord (3) dudit véhicule (1).

6. Véhicule (1) selon l'une des revendications précédentes, dans lequel ladite seconde interface (11) est intégrée dans un dispositif mobile.

7. Véhicule (1) selon la revendication 3, dans lequel ledit système de commande (6) comprend une unité électronique (20) connectée fonctionnellement auxdites interfaces (7, 11), auxdits moyens capteurs et auxdits systèmes de chauffage électrique et de combustible liquide, ladite unité électronique (20) comprenant des moyens de traitement configurés pour recevoir des données provenant desdits éléments, auxquels elle est connectée fonctionnellement, et pour commander le fonctionnement desdits systèmes de chauffage électrique et de combustible liquide.

8. Véhicule (1) selon la revendication 7, dans lequel ladite unité électronique (20) est configurée pour acquérir les données d'entrée suivantes :
• une première pluralité de données d'entrée (I') comprenant des données provenant de ladite première interface (7) ;
• une deuxième pluralité de données d'entrée (I'') comprenant des données provenant des moyens capteurs ;
• une troisième pluralité de données d'entrée (I‴) comprenant des données provenant de ladite seconde interface (11), et pour traiter de telles données et fournir les signaux de sortie suivants :
• un premier signal de sortie (O') configuré pour activer ou désactiver le système de chauffage électrique ;
• un deuxième signal de sortie (O") configuré pour activer ou désactiver le système de chauffage de combustible liquide ; et
• un troisième signal de sortie (O‴) configuré pour afficher une image et/ou un message texte par l'intermédiaire desdites interfaces (7, 11).

9. Véhicule (1) selon la revendication 8, dans lequel ladite unité électronique (20) traite un algorithme de machine à états finis configuré pour associer lesdites données d'entrée (I', I", I‴) auxdits signaux de sortie (O', O", O‴).

10. Véhicule (1) selon la revendication 9, dans lequel ledit algorithme de machine à états finis comprend au moins une table de recherche.

11. Véhicule (1) selon la revendication 10, dans lequel ledit algorithme de machine à états finis comprend une première table de recherche applicable lorsque les premiers éléments d'entrée (8') sont dans un état « allumé » et une seconde table de recherche applicable lorsque les premiers éléments d'entrée (8') sont dans un état « éteint ».

12. Méthode pour gérer le chauffage dans un véhicule (1) selon l'une des revendications 9 à 11, comprenant les étapes consistant à :
- i) acquérir des données (I', I", I‴) à partir des moyens capteurs et à partir desdites interfaces (7, 11) ;
- ii) traiter les données (I', I", I‴) acquises à l'étape i) par l'intermédiaire dudit algorithme de machine à états finis ; et
- iii) commander l'activation dudit système de chauffage de combustible liquide et dudit système de chauffage électrique et l'affichage d'informations par l'intermédiaire desdites interfaces (7, 11).
